# EUROPÄISCHE PATENTSCHRIFT

(11) **EP 3 601 902 B1**
(45) Veröffentlichungstag und Bekanntmachung des Hinweises auf die Patenterteilung: **18.05.2022**
(21) Anmeldenummer: 18712584.4
(22) Anmeldetag: 20.03.2018
(51) Int. Cl.: F25B 49/02, F25B 41/31, F25D 11/02, F25B 5/04

(54) **KÄLTEGERÄT UND BETRIEBSVERFAHREN DAFÜR**
REFRIGERATION APPLIANCE AND METHOD FOR THE OPERATION THEREOF
APPAREIL FRIGORIFIQUE ET PROCÉDÉ DE FONCTIONNEMENT ASSOCIÉ

(30) Priorität: 30.03.2017 DE 102017205426
(43) Veröffentlichungstag der Anmeldung: 05.02.2020
(73) Patentinhaber: BSH Hausgeräte GmbH, 81739 München (DE)
(72) Erfinder: MRZYGLOD, Matthias, 89075 Ulm (DE); ULRICH, Vitali, 89257 Illertissen (DE); LIENGAARD, Niels, 89079 Ulm (DE)
(86) Internationale Anmeldenummer: PCT/EP2018/057009
(87) Internationale Veröffentlichungsnummer: WO 2018/177809

(56) Entgegenhaltungen:
- WO-A1-2015/074894
- DE-A1-102012 211 270
- DE-A1-102013 226 341
- DE-A1-102015 211 960
- JP-A- S50 150 956
- JP-A- 2001 133 112
- JP-U- S51 137 154

## Beschreibung

Die vorliegende Erfindung betrifft ein Kältegerät, insbesondere ein Haushaltskältegerät, mit mehreren Temperaturzonen und ein Verfahren zum Betreiben eines solchen Kältegeräts.

Aus DE 10 2013 226 341 A1 ist ein Kältegerät mit einer ersten und einer zweiten Temperaturzone bekannt, bei dem ein Kältemittelkreislauf einen Verdichter, einen ersten Verdampfer zum Kühlen der ersten Temperaturzone und, mit dem ersten Verdampfer in Reihe verbunden, einen zweiten Verdampfer zum Kühlen der zweiten Temperaturzone umfasst, und jedem Verdampfer im Kältemittelkreislauf ein steuerbares Expansionsventil vorgeschaltet ist.

Bei diesem bekannten Kältegerät wird in dem Fall, dass in einer Temperaturzone unbefriedigter Kühlbedarf besteht, an dem steuerbaren Expansionsventil, das dem Verdampfer dieser Temperaturzone vorgelagert ist, die Drosselung erhöht, so dass die Verdampfungstemperatur in dem betreffenden Verdampfer abnimmt. Um zu verhindern, dass sich diese Maßnahme auch auf andere, im Kältemittelkreislauf nachgeschaltete Verdampfer auswirkt, wird im Gegenzug die Drosselung in einem dem betreffenden Verdampfer nachgeschalteten Expansionsventil vermindert, so dass der Drosselung der in Reihe geschalteten Expansionsventile unverändert bleibt: So bleibt auch der Massenstrom des Kältemittels im Kältemittelkreis insgesamt unverändert, so dass Kühlleistung, die auf diese Weise in der betreffenden Temperaturzone zusätzlich zur Verfügung steht, den anderen Temperaturzonen vorenthalten werden muss. Kommt es in der Folge in einer anderen Temperaturzone zu unbefriedigtem Kühlbedarf, so wird die verfügbare Kühlleistung erneut umverteilt, was zu unerwünschten Temperaturschwankungen führt. Durch die Umverteilung der Kühlleistung ist es nicht möglich, wechselndem Kühlbedarf aller Temperaturzonen Rechnung zu tragen, der sich in der Praxis unvermeidlicherweise durch Temperaturänderungen der Umgebung des Kältegeräts ergibt.

Aufgabe der Erfindung ist, ein Kältegerät der aus DE 10 2013 226 341 A1 bekannten Art so weiterzubilden bzw. ein Verfahren zum Betrieb eines Kältegeräts zu schaffen, die eine einfache und stabile Temperatursteuerung der verschiedenen Temperaturzonen ermöglichen.

Die JPS51137154U offenbart ein Kältegerät gemäß dem Oberbegriff des Patentanspruchs 1.

Die Aufgabe wird zum einen gelöst, indem bei einem Kältegerät mit wenigstens einer ersten und einem zweiten Temperaturzone, einem Kältemittelkreislauf, der einen Verdichter, einen ersten Verdampfer zum Kühlen der ersten Temperaturzone und einen zweiten Verdampfer zum Kühlen der zweiten Temperaturzone umfasst, wobei der erste Verdampfer dem zweiten Verdampfer in dem Kältemittelkreislauf in Reihe nachgeschaltet ist und eine erste steuerbare Drosselstelle in dem Kältemittelkreislauf dem ersten Verdampfer vor- und dem zweiten Verdampfer nachgeschaltet ist, ein erster Regler den Öffnungsgrad der ersten steuerbaren Drosselstelle unabhängig von der Temperatur der ersten Temperaturzone anhand der Temperatur der zweiten Temperaturzone steuert.

Grundgedanke ist hierbei, dass der Massenstrom im Kältemittelkreislauf durch die Ansaugbedingungen (Druck und Temperatur) bestimmt ist, die an einem Sauganschluss des Verdichters bzw. an einem zu diesem Sauganschluss führenden Auslass des ersten Verdampfers herrschen. Wenn der Öffnungsgrad der ersten steuerbaren Drosselstelle verändert wird, dauert es geraume Zeit, bis daraus eine Veränderung der Ansaugbedingungen (überhitztes Gas mit Verdampfungsdruck) in dem zwischen der ersten Drosselstelle und dem Sauganschluss gelegenen ersten Verdampfer resultiert. Solange die Ansaugbedingungen dieselben bleiben, wirkt sich die Verstellung des Öffnungsgrads nicht auf den Massenstrom aus, wohl aber auf die die Kühlleistung des der ersten steuerbaren Drosselstelle vorgelagerten zweiten Verdampfers.

Erst mit einer Veränderung der Ansaugbedingungen kommt es auch zu einer Veränderung der Kühlleistung des der ersten steuerbaren Drosselstelle nachgelagerten ersten Verdampfers. Um dieser Veränderung gegenzusteuern, ist ein Verdichterregler vorgesehen, der eine Anpassung der Verdichterdrehzahl anhand der Temperatur der ersten Temperaturzone steuert. Erst diese Drehzahländerung führt auch zu einer Änderung des Massenstroms Entsprechend dem Massenstrom verändert sich auch die Kühlleistung, die auf die verschiedenen Temperaturzonen verteilt werden kann, so dass die Änderung der auf den zweiten Verdampfer entfallenden Kühlleistung nicht oder zumindest nicht vollständig durch eine entgegengesetzte Leistungsänderung am ersten Verdampfer kompensiert werden muss. Somit ist auf einfache Weise eine regelungstechnische Entkopplung der einzelnen Temperaturzonen möglich. Aufgrund der Trägheit des Systems ist es unerheblich, wann eine Änderung der Gesamtkälteleistung aufgrund eines kurzfristig unbefriedigten Kältebedarfs eines einzelnen Faches erfolgt.

Die Unabhängigkeit von der Temperatur der ersten Temperaturzone vereinfacht die Steuerung der ersten Drosselstelle, da keine zwei Einflussgrößen gleichzeitig berücksichtigt werden müssen.

Der erste Regler sollte eingerichtet sein, bei Überschreitung einer Solltemperatur in der zweiten Temperaturzone den Öffnungsgrad der ersten steuerbaren Drosselstelle heraufzusetzen und bei Unterschreitung einer Solltemperatur in der zweiten Temperaturzone den Öffnungsgrad der ersten steuerbaren Drosselstelle herabzusetzen. Wenn etwa der erste Regler den Öffnungsgrad der ersten steuerbaren Drosselstelle heraufsetzt, dann nimmt der Druck im zweiten Verdampfer ab, und in der Folge vermindert sich auch dessen Temperatur, so dass die zweite Temperaturzone wie gewünscht stärker gekühlt wird; umgekehrt steigen Druck und Temperatur des zweiten Verdampfers, wenn der Öffnungsgrad der ersten steuerbaren Drosselstelle erhöht wird. Um eine schnelle Anpassung des Öffnungsgrads an veränderte Bedingungen zu ermöglichen, sollte der erste Regler ein Proportionalregler, vorzugsweise ein PI-Regler sein, d.h. die von ersten Regler veranlasste Änderung des Öffnungsgrades sollte einen zur Abweichung zwischen Ist- und Solltemperatur proportionalen Term und vorzugsweise auch einen zur Dauer der Abweichung proportionalen Term enthalten.

Die zweite Temperaturzone sollte einen Temperatursensor aufweisen, der an einen Eingang des ersten Reglers angeschlossen ist. Weitere Messgrößen werden für die Steuerung der ersten steuerbaren Drosselstelle nicht benötigt; d.h. dieser Eingang kann der einzige eine Messgröße empfangende Eingang des ersten Reglers sein.

Dem ersten Verdampfer ist typischerweise keine steuerbare Drosselstelle nachgeschaltet.

Um auch dessen Temperatur beeinflussen zu können, ist wie bereits erwähnt ein Verdichterregler vorgesehen, der die Drehzahl des Verdichters anhand der Temperatur bzw. eines unbefriedigtem Kühlbedarfs der in Strömungsrichtung letzten Temperaturzone steuert.

Der Verdichterregler sollte eingerichtet sein, bei Überschreitung einer Solltemperatur in der in Strömungsrichtung letzten Temperaturzone die Drehzahl des Verdichters heraufzusetzen und bei Unterschreitung einer Solltemperatur in der in Strömungsrichtung letzten Temperaturzone die Drehzahl des Verdichters herabzusetzen. Ähnlich der oben erläuterten Erhöhung des Öffnungsgrads der ersten steuerbaren Drosselstelle bewirkt die Heraufsetzung der Drehzahl nicht nur eine Verringerung des Drucks und der Temperatur im ersten Verdampfer, sondern gleichzeitig auch einen erhöhten Massenstrom des Kältemittels, so dass eine benötigte zusätzliche Kühlleistung in einer der Temperaturzone bereitgestellt werden. Dies begünstigt unter anderem eine schnelle Wiederherstellung eines stationären, energieeffizienten Betriebszustands des Kältegeräts, wenn nach einer Änderung der Umgebungstemperatur der Kühlbedarf aller Temperaturzonen verändert ist.

Der Verdichterregler kann an den ersten Regler gekoppelt und eingerichtet sein, bei einer Vergrößerung des Öffnungsgrads der ersten steuerbaren Drosselstelle die Drehzahl heraufzusetzen und sie bei einer Verringerung des Öffnungsgrads der ersten steuerbaren Drosselstelle herabzusetzen. So ist eine vorausschauende Anpassung der Verdichterdrehzahl bereits zu einem Zeitpunkt möglich, an dem sich ein veränderter Öffnungsgrad der ersten steuerbaren Drosselstelle noch gar nicht auf die Kühlleistung des ersten Verdampfers ausgewirkt hat.

Auch der Verdichterregler kann ein Proportional- oder PI-Regler sein.

Das Prinzip der Erfindung kann auf eine unbestimmte Zahl von in Reihe verbundenen Verdampfern erweitert werden, indem etwa ein dritter Verdampfer zum Temperieren einer dritten Temperaturzone dem zweiten Verdampfer im Kältemittelkreislauf über eine zweite steuerbare Drosselstelle vorgeschaltet ist und ein zweiter Regler vorgesehen ist, um den Öffnungsgrad der zweiten steuerbaren Drosselstelle anhand der Temperatur der dritten Temperaturzone unabhängig von der Temperatur der zweiten Temperaturzone zu steuern.

Selbstverständlich kann dann der Verdichterregler auch an den zweiten Regler gekoppelt sein, um eine Veränderung des Öffnungsgrads der zweiten steuerbaren Drosselstelle bei der Festlegung der Verdichterdrehzahl zu berücksichtigen.

Der zweite Regler zum Steuern der zweiten Drosselstelle kann völlig unabhängig vom ersten Regler arbeiten. In der Praxis können zwar beide Regler als Software auf einem gleichen Prozessor implementiert sein; ihre gegenseitige Unabhängigkeit findet ihren Ausdruck darin, dass weder beide auf dieselben Temperatursensoren zugreifen noch einer der Regler Ausgabedaten des anderen als Eingaben verwendet.

Zwischen einem Druckanschluss des Verdichters und den Verdampfern kann eine stromaufwärtige steuerbare Drosselstelle vorgesehen sein. Um die Verteilung des Kältemittels zwischen den Verdampfern und einem Hochdruckabschnitt des Kältemittelkreises zu steuern, kann der Öffnungsgrad dieser Drosselstelle anhand eines Temperaturgefälles am ersten Verdampfer gesteuert sein. Ein hierfür verwendeter Verteilungsregler kann wiederum im oben präzisierten Sinne unabhängig vom ersten, zweiten und eventuell weiteren Reglern sein.

Für einen effizienten Wärmeübergang zwischen Verdampfer und zugeordneter Temperaturzone kann wenigstens einem der Verdampfer ein Ventilator zum Antreiben eine Oberfläche des Verdampfers überstreichenden Luftstroms zugeordnet sein.

Um die Luftfeuchtigkeit in der Temperaturzone zu steuern, kann dieser Ventilator zwischen wenigstens zwei Betriebsmodi mit unterschiedlichen Drehzahlen umschaltbar sein. Einer dieser Modi kann ein Betrieb mit hoher Drehzahl sein, der die Temperaturdifferenz zwischen Temperaturzone und Verdampfer klein hält und dementsprechend nur eine geringe Entfeuchtung der umgewälzten Luft am Verdampfer bewirkt. Die in diesem Modus relativ hohe Verdampfertemperatur ermöglicht zwar eine effiziente Kälteerzeugung, erreicht aber aufgrund der hohen Ventilatorleistung keinen idealen Wirkungsgrad. In einem zweiten Modus kann der Ventilator ausgeschaltet oder mit geringer Drehzahl betrieben sein, so dass der Verdampfer tiefe Temperaturen erreicht, die zwar in der Regel auch nicht ideal energieeffizient sind, aber eine starke Luftentfeuchtung bewirken. In einem weiteren Modus kann der Ventilator mit mittlerer Drehzahl betrieben werden, um die Energieeffizienz des Geräts zu optimieren.

Die Aufgabe wird ferner gelöst durch ein Verfahren zum Betreiben eines Kältegeräts mit wenigstens einer ersten und einem zweiten Temperaturzone, einem Kältemittelkreislauf, der einen Verdichter, einen ersten Verdampfer zum Kühlen der ersten Temperaturzone und einen zweiten Verdampfer zum Kühlen der zweiten Temperaturzone umfasst, wobei der erste Verdampfer dem zweiten Verdampfer in dem Kältemittelkreislauf in Reihe nachgeschaltet ist und eine erste steuerbare Drosselstelle in dem Kältemittelkreislauf dem ersten Verdampfer vor- und dem zweiten Verdampfer nachgeschaltet ist, bei dem die Temperatur der zweiten Temperaturzone gemessen und der Öffnungsgrad der ersten steuerbaren Drosselstelle anhand der Temperatur der zweiten Temperaturzone unabhängig von der Temperatur der ersten Temperaturzone gesteuert wird.

Eine variable Drehzahl des Verdichters wird anhand der gemessenen Temperatur der ersten Temperaturzone gesteuert.

Die Drehzahl des Verdichters kann ferner im Falle einer Vergrößerung des Öffnungsgrads der ersten (oder, wenn vorhanden, zweiten) steuerbaren Drosselstelle heraufgesetzt und bei einer Verringerung des Öffnungsgrads derselben steuerbaren Drosselstelle herabgesetzt werden.

Weitere Merkmale und Vorteile der Erfindung ergeben sich aus der Beschreibung von Ausführungsbeispielen unter Bezugnahme auf die beigefügten Figuren. Es zeigen:
- Fig. 1: eine schematische Darstellung des erfindungsgemäßen Kältegeräts gemäß einer ersten Ausgestaltung;
- Fig. 2: ein Flussdiagramm eines Arbeitsverfahrens eines Reglers des Kältegeräts;
- Fig. 3: ein abgewandeltes Detail des Kältegeräts;
- Fig. 4: eine zu Fig. 1 analoge Darstellung gemäß einer zweiten Ausgestaltung; und
- Fig. 5: ein Flussdiagramm eines Arbeitsverfahrens eines Verdichterreglers.

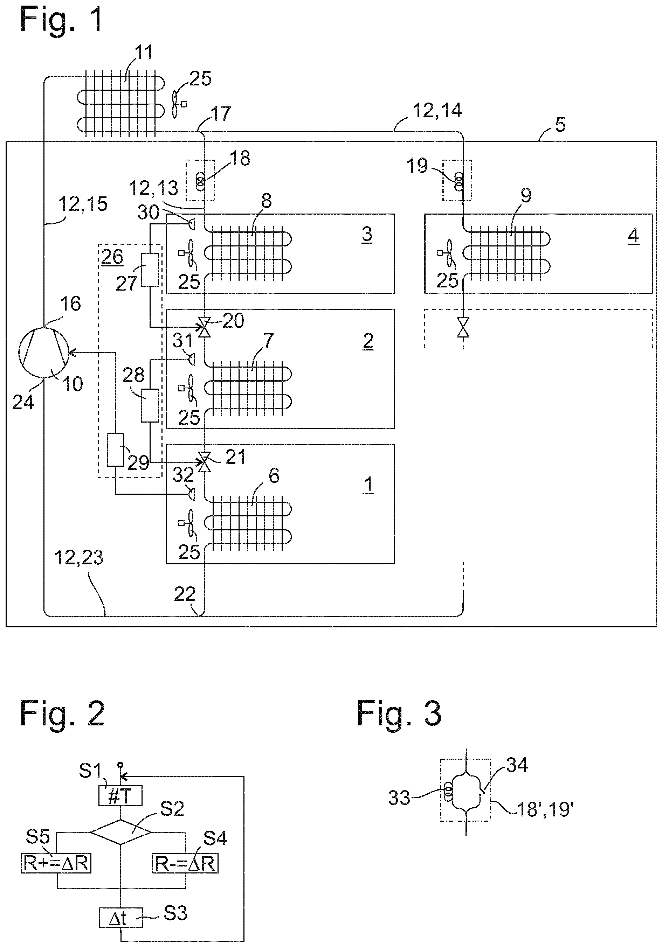

Fig. 1 zeigt schematisch ein Kältegerät gemäß einer ersten Ausgestaltung der Erfindung. Das Kältegerät ist ein Kombinationsgerät und umfasst mehrere Temperaturzonen 1, 2, 3, 4, typischerweise in Form von jeweils durch eine Tür verschließbaren und durch wärmedämmende Wände voneinander getrennten Lagerfächern in einem Gehäuse 5.

Jede Temperaturzone 1, 2, 3, 4 hat einen Verdampfer 6, 7, 8 bzw. 9, die in einem Kältemittelkreis mit einem Verdichter 10 und einem Verflüssiger 11 verbunden sind. Wenigstens zwei Verdampfer, hier die Verdampfer 6, 7, 8, sind entlang eines Zweiges 13 einer Kältemittelleitung 12 in Reihe verbunden; die Kältemittelleitung 12 kann wie gezeigt weitere, zum Zweig 13 parallele Zweige 14 aufweisen, die weitere Verdampfer, hier den Verdampfer 9, versorgen.

Jeder Verdampfer 6, 7, 8, 9 und der Verflüssiger 11 sind jeweils mit einem Ventilator 25 zur Steigerung der Wärmeaustauschleistung kombiniert.

Die Temperaturzonen 1, 2, 3, 4 können in an sich bekannter Weise jeweils in ein Lagerfach und eine den Verdampfer 6, 7, 8 oder 9 aufnehmende Verdampferkammer unterteilt sein, wobei dann der Ventilator 25 den Luftaustausch zwischen Lagerfach und Verdampferkammer antreibt.

Die Temperaturdifferenz, die zwischen einem Verdampfer und dem von ihm gekühlten Lagerfach bestehen muss, um das Lagerfach auf seiner Solltemperatur halten zu können, hängt ab vom Ausmaß des Luftaustauschs zwischen Lagerfach und Verdampferkammer. Ist dieser gering, dann muss die Verdampfertemperatur niedrig sein, und da die Aufrechterhaltung der niedrigen Verdampfertemperatur eine hohe Leistung des Verdichters 11 erfordert, ist die Energieeffizienz des Geräts eingeschränkt. Wasserdampf, der vom Lagerfach in die Verdampferkammer gelangt, schlägt sich aufgrund der niedrigen Verdampfertemperatur fast vollständig auf dem Verdampfer nieder, so dass die Luftfeuchtigkeit in der Lagerkammer niedrig ist. Umgekehrt kann die Temperaturdifferenz zwischen Verdampfer und Lagerfach klein gehalten werden, wenn der Ventilator 25 für einen starken Luftaustausch sorgt. Die Anforderungen an die Leistung des Verdichters 10 sind dann verringert, im Gegenzug wird aber mehr Energie für den Betrieb des Lüfters 25 verbraucht. Aufgrund der geringen Temperaturdifferenz ist auch die Kondensation am Verdampfer gering, und eine hohe Luftfeuchtigkeit kann in der Lagerkammer aufrechterhalten werden. Zwischen diesen beiden Extremfällen gibt es einen effizienzoptimierten Betriebsmodus, in dem die Leistung sowohl des Verdichters 10 als auch des Ventilators 25 gering, aber nicht minimal ist und die Summe ihrer Leistungen ein Minimum erreicht. Es kann vorgesehen werden, dass der Benutzer für jede Temperaturzone 1, 2, 3 oder 4 einen dieser Betriebsmodi auswählen kann.

Ein Hochdruckabschnitt 15 der Kältemittelleitung 12 erstreckt sich von einem Druckanschluss 16 des Verdichters 10 über den Verflüssiger 11 und hier eine Verzweigung 17 zu einer stromaufwärtigen Drosselstelle 18, 19. Die stromaufwärtige Drosselstelle 18, 19 hat einen unveränderlichen Strömungswiderstand. Sie ist hier jeweils in an sich bekannter Weise durch eine Kapillare gebildet, die in den Verdampfer 8 bzw. 9 einmündet.

Stromabwärts schließen sich an den Verdampfer 8 der Reihe nach eine steuerbare Drosselstelle 20, der Verdampfer 7, eine weitere steuerbare Drosselstelle 21 und der Verdampfer 6 an. Da der Druck in der Kältemittelleitung 12 nach jeder Drosselstelle 18, 20, 21 abnimmt, ist von den Temperaturzonen 1, 2, 3 die Zone 3 die wärmste und die Zone 1 die kälteste. So kann die Zone 3 z.B. ein Normalkühlfach, die Zone 2 ein Frischkühlfach und die Zone 1 ein Gefrierfach bilden.

Stromabwärts vom Verdampfer 6 treffen die Zweige 13, 14 an einem Zusammenfluss 22 wieder aufeinander, und ein Saugabschnitt 23 der Kältemittelleitung 12 führt zu einem Sauganschluss 24 des Verdichters 10.

Auf einem Mikroprozessor 26 sind mehrere Regler 27, 28, 29 implementiert. Die Regler 27, 28, 29 sind Dienstprogramme, die sich die Verarbeitungsleistung des Mikroprozessors 26 teilen, aber nicht auf gemeinsame Daten zugreifen. Jeder Regler 27, 28, 29 empfängt und verarbeitet Messwerte von genau einem Temperatursensor 30, 31 bzw. 32.

Fig. 2 zeigt ein Arbeitsverfahren des Reglers 27. In Schritt S1 wird ein Messwert der Temperatur aus dem zugeordneten Sensor 30 ausgelesen. Der Messwert wird in Schritt S2 mit einem für die Temperaturzone 6 vom Benutzer vorgegebenen Solltemperatur verglichen. Sofern der Messwert innerhalb eines Toleranzintervalls um die Solltemperatur liegt, geht das Verfahren über zu Schritt S3, in dem das Verstreichen einer Zeitspanne Δt abgewartet und anschließend zu Schritt S1 zurückgekehrt wird, um das Verfahren in regelmäßigen Zeitabständen zu wiederholen.

Wenn in S2 festgestellt wird, dass die gemessene Temperatur über dem Toleranzintervall liegt, dann besteht offensichtlich Bedarf nach höherer Kühlleistung in der Temperaturzone 8. In diesem Fall steuert der Regler 27 in Schritt S4 die Drosselstelle 20 an, um deren Strömungswiderstand um einen festen Wert ΔR herabzusetzen. Das Ausmaß der Verminderung kann fest vorgegeben oder proportional zur Abweichung zwischen gemessener Temperatur und Solltemperatur sein.

Durch die Herabsetzung des Strömungswiderstands sinkt die Verdampfungstemperatur im Verdampfer 8, und die Kühlung der Temperaturzone 3 wird stärker. Gleichzeitig gelangt mehr flüssiges Kältemittel in den Verdampfer 7, ohne dass von dort mehr Kältemittel abfließt, so dass dort im Laufe der Zeit der Druck steigt und die Kühlleistung geringer wird.

Wenn der Schritt S2 nach der Wartezeit Δt wiederholt wird und die gemessene Temperatur weiterhin über dem Toleranzintervall liegt, dann wird der Strömungswiderstand der Drosselstelle 20 erneut herabgesetzt. So ändert sich der Strömungswiderstand proportional zum Zeitintegral der Regelabweichung so lange, bis der Kühlbedarf der Temperaturzone 3 gedeckt ist und die vom Sensor 30 gemessene Temperatur im Toleranzintervall liegt.

Liegt umgekehrt die gemessene Temperatur in Schritt S2 unterhalb des Toleranzintervalls, dann erhöht der Regler in Schritt S5 den Strömungswiderstand der Drosselstelle 20 um den Wert ΔR, so dass die Temperatur des Verdampfers 8 steigt. Auch die Heraufsetzung des Strömungswiderstands kann in aufeinanderfolgenden Iterationen des Verfahrens wiederholt werden.

Eine Berücksichtigung des für die Temperaturzone 3 gewählten Betriebsmodus des Ventilators 25 ist im Rahmen des Verfahrens nicht nötig; falls der Benutzer den Betriebsmodus verändert, führt dies zunächst zu einer Änderung der vom Sensor 30 gemessenen Temperatur und anschließend, im Laufe einer oder mehrerer Iterationen des oben beschriebenen Verfahrens, zu einer Anpassung des Strömungswiderstands, durch die die Temperaturzone 3 ihre Solltemperatur wieder erreicht.

Das Arbeitsverfahren des Reglers 28 hat dieselben Schritte wie in Fig. 2 dargestellt. In Schritt S1 wird die Temperatur der Temperaturzone 2 oder ihres Verdampfers 7 aus dem Sensor 31 ausgelesen; in Schritt S2 wird sie mit dem für diese Temperaturzone festgelegten Sollwert verglichen und je nach Ergebnis der Strömungswiderstand der Drosselstelle 21 unverändert beibehalten, herabgesetzt (S4) oder heraufgesetzt (S5). Das Ausmaß ΔR der Veränderung kann, muss aber nicht mit dem beim Regler 27 verwendeten identisch sein. Die Herabsetzung führt zu Druck- und Temperaturabnahme im Verdampfer 7 und, in geringerem Umfang, im Verdampfer 8, so dass in beiden Verdampfern 7, 8 eine höhere Kühlleistung zur Verfügung steht.

Wenn die Herabsetzung nötig wurde, weil aufgrund erhöhten Kühlbedarfs der Temperaturzone 3 der Regler 27 den Strömungswiderstand der Drosselstelle 20 herabgesetzt hat und deshalb die Temperatur im Verdampfer 7 angestiegen ist, dann trägt die Herabsetzung des Strömungswiderstands der Drosselstelle 21 dazu bei, dass der Kühlbedarf der Temperaturzone 3 schnell befriedigt wird.

Entsprechend nimmt bei einer Heraufsetzung des Strömungswiderstands der Drosselstelle 21 der Druck im Verdampfer 7 und, in geringerem Umfang, im Verdampfer 8 zu.

Wenn in der Temperaturzone 1 die vom Sensor 32 gemessene Temperatur von der Solltemperatur abweicht, gibt es keine dem Verdampfer 6 nachgeschaltete Drosselstelle, über die die Verdampfungstemperatur beeinflusst werden könnte. Deshalb führt der Regler 29 ein leicht abgewandeltes Verfahren aus, bei dem im Falle einer Überschreitung der Solltemperatur in Schritt S4 die Drehzahl des Verdichters 10 herauf- bzw. im Falle einer Unterschreitung in Schritt S5 herabgesetzt wird. S4 führt wie im Falle der Regler 27, 28 zu einer Abnahme der Verdampfungstemperatur im zugeordneten Verdampfer 6,. gleichzeitig aber auch zu einer Zunahme des Massenstroms, so dass insgesamt mehr auf die verschiedenen Verdampfer zu verteilende Kühlleistung zur Verfügung steht. Umgekehrt erhöht S5 die Verdampfungstemperatur bei gleichzeitiger Drosselung des Massenstroms.

Veränderter Kältebedarf pflanzt sich so schrittweise durch das Kältegerät fort: Im Falle von erhöhtem Kältebedarf in der Temperaturzone 3 führt die Befriedigung des Bedarfs durch Öffnen der Drosselstelle 20 mit Verzögerung dazu, dass der Kältebedarf in der Temperaturzone 2 nicht mehr vollständig befriedigt wird, eine diesbezügliche Korrektur des Öffnungsgrads der Drosselstelle 21 führt zu Erwärmung der Temperaturzone 1 und darauffolgender Korrektur der Verdichterdrehzahl.

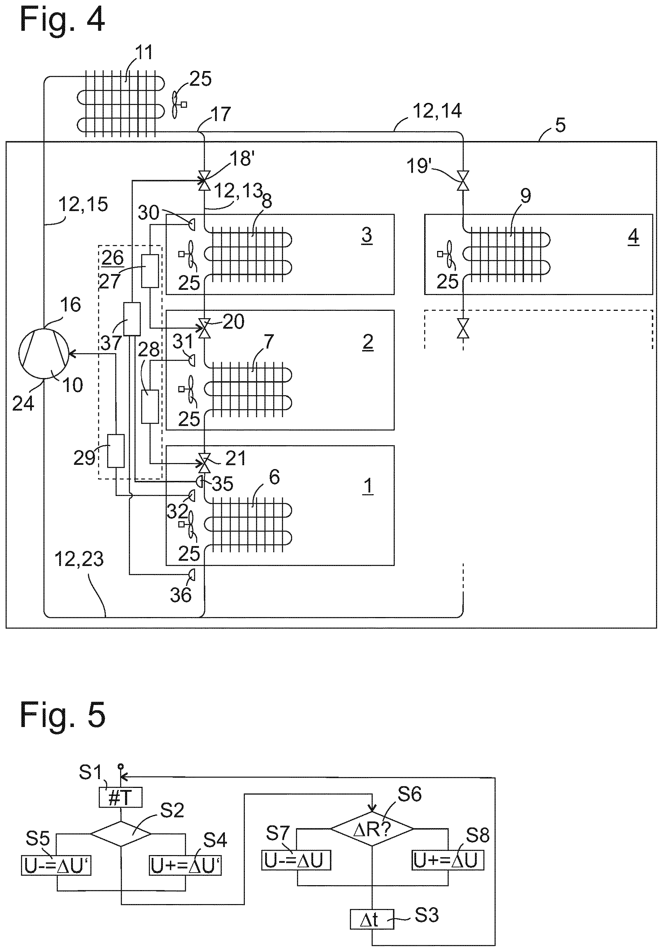

Um die Konvergenz der Regelung zu beschleunigen, kann vorgesehen werden, dass der Verdichterregler 29 an die Regler 27, 28 gekoppelt ist, um von diesen Informationen über eine Veränderung des Strömungswiderstands der von ihnen gesteuerten Drosselstellen 20, 21 zu empfangen und die Drehzahl des Verdichters 10 entsprechend der Veränderung nachzuführen, bevor sich die Veränderung des Strömungswiderstands als Temperaturänderung in der Temperaturzone 1 ausgewirkt hat. Eine solche Kopplung kann z.B. darin bestehen, dass jeweils dann, wenn einer der Regler 27, 28 den Schritt S4 den Strömungswiderstand um ΔR herauf- oder herabsetzt, der Verdichterregler 29 die Drehzahl des Verdichters 10 um ein entsprechendes Inkrement ΔU vermindert bzw. erhöht. Fig. 5 zeigt ein Arbeitsverfahren des Verdichterreglers 29, das eine solche Kopplung verwirklicht. Die Schritte S1-S5 entsprechen denen der Fig. 2 bis auf die Tatsache, dass wenn in Schritt S2 die gemessene Temperatur über dem Sollwert für die Temperaturzone 1 liegt, in Schritt S4 die Drehzahl um einen festen Wert ΔU' herauf- bzw. bei Unterschreitung des Sollwerts, in S5 um den Wert ΔU' herabgesetzt wird. In jeder Iteration des Verfahrens wird in Schritt S6 überprüft, ob seit der vorhergehenden Iteration wenigstens einer der Regler 27, 28 eine Veränderung ΔR des Strömungswiderstands an seiner steuerbaren Drosselstelle 20 oder 21 vorgenommen hat. Im Falle einer Heraufsetzung um ΔR wird die Drehzahl um ΔU vermindert (S7), im Falle einer Herabsetzung um ΔU erhöht (S8). Der Wert von ΔU kann unterschiedlich sein, je nachdem, an welcher Drosselstelle 20 oder 21 die Veränderung des Strömungswiderstands erfolgt ist.

Einer abgewandelten Ausgestaltung zufolge sind die Kapillaren an den Drosselstellen 18, 19 der Fig. 1 durch steuerbare Drosselstellen 18', 19' ersetzt. Diese steuerbaren Drosselstellen 18', 19' können Expansionsventile vom gleichen Typ wie an den Drosselstellen 20, 21 sein, sie können aber auch, wie in Fig. 3 gezeigt, eine Parallelschaltung aus einer Kapillare 33 und einem Absperrventil 34 sein. Indem, etwa durch Öffnen des Absperrventils 34, der Strömungswiderstand der Drosselstelle 18' vernachlässigbar gering gemacht wird, kann der Druck im Verdampfer 8 an den des Verflüssigers 11 angeglichen werden, so dass Kältemittel im Verdampfer 8 kondensiert, anstatt zu verdampfen, und die Temperaturzone 3 durch die dabei freigesetzte Wärme beheizt wird.

Auch in diesem Fall arbeiten die Regler 28, 29 weiter nach dem in Verbindung mit Fig. 2 beschriebenen Verfahren, um die verfügbare Kühlleistung bedarfsgerecht auf die Temperaturzonen 1, 2 zu verteilen.

Fig. 4 zeigt ein zu Fig. 1 analoges Diagramm eines Kältegeräts gemäß einer weiterentwickelten Ausgestaltung der Erfindung. Identische Bezugszeichen in beiden Figuren bezeichnen bereits in Verbindung mit Fig. 1 beschriebene Komponenten; das in der Beschreibung von Fig. 1 zu diesen Komponenten Gesagte gilt auch hier und braucht nicht wiederholt zu werden. Ein zusätzlicher Temperatursensor 35 ist benachbart zur Einspritzstelle des Verdampfers 6 montiert, um dessen Verdampfungstemperatur auch dann sicher zu erfassen, wenn die Füllung mit flüssigem Kältemittel nicht ausreicht, um ihn auf seiner ganzen Ausdehnung auf der Verdampfungstemperatur zu halten. Der Temperatursensor 35 kann auch zur Steuerung einer Abtauheizung zum Abtauen des Verdampfers 6 dienen. Noch ein weiterer Temperatursensor 36 ist an einem Auslass des Verdampfers 6 oder am Saugabschnitt 23 angebracht, um die Temperatur des zum Verdichter 10 zurückströmenden Kältemitteldampfs zu erfassen. Ein weiterer Regler 37 ist mit beiden Temperatursensoren 35, 36 verbunden, um die Differenz der Temperaturen zu überwachen und anhand dieser Differenz den Strömungswiderstand eines Expansionsventils zu steuern, das als steuerbare Drosselstelle 18' zwischen den Verflüssiger 11 und den Verdampfer 8 eingefügt ist. Ist die Differenz zu gering, dann deutet dies auf einen hohen Füllungsgrad des Verdampfers 6 und die Möglichkeit hin, dass aufgrund von Überfüllung flüssiges Kältemittel in den Saugabschnitt 23 gelangt. Wenn dies der Fall ist, erhöht der Regler 37 den Strömungswiderstand der Drosselstelle 18', so dass sich vermehrt flüssiges Kältemittel vor der Drosselstelle 18' staut und im Gegenzug die Menge des Kältemittels im Verdampfer 6 abnimmt. Wenn hingegen die Differenz zu hoch ist, d.h. wenn die vom Sensor 35 gemessene Temperatur des abgesaugten Kältemitteldampfes nur wenig niedriger ist als die Fachtemperatur der Temperaturzone 1, dann deutet dies auf eine unzureichende Füllung des Verdampfers 6 hin, und der Strömungswiderstand der Drosselstelle 18' wird herabgesetzt, um mehr flüssiges Kältemittel über die Verdampfer 8, 7 bis in den Verdampfer 6 vordringen zu lassen.

### BEZUGSZEICHEN

- 1: Temperaturzone
- 2: Temperaturzone
- 3: Temperaturzone
- 4: Temperaturzone
- 5: Gehäuse
- 6: Verdampfer
- 7: Verdampfer
- 8: Verdampfer
- 9: Verdampfer
- 10: Verdichter
- 11: Verflüssiger
- 12: Kältemittelleitung
- 13: Zweig
- 14: Zweig
- 15: Hochdruckabschnitt
- 16: Druckanschluss
- 17: Verzweigung
- 18: Drosselstelle
- 19: Drosselstelle
- 20: Drosselstelle
- 21: Drosselstelle
- 22: Zusammenfluss
- 23: Saugabschnitt
- 24: Sauganschluss
- 25: Ventilator
- 26: Mikroprozessor
- 27: Regler
- 28: Regler
- 29: Regler
- 30: Temperatursensor
- 31: Temperatursensor
- 32: Temperatursensor
- 33: Kapillare
- 34: Absperrventil
- 35: Temperatursensor
- 36: Temperatursensor
- 37: Regler

## Patentansprüche

1. Kältegerät mit wenigstens einer ersten und einer zweiten Temperaturzone (1, 2), einem Kältemittelkreislauf, der einen Verdichter (10), einen ersten Verdampfer (6) zum Kühlen der ersten Temperaturzone (1) und einen zweiten Verdampfer (7) zum Kühlen der zweiten Temperaturzone (2) umfasst, wobei der erste Verdampfer (6) dem zweiten Verdampfer (7) in dem Kältemittelkreislauf in Reihe nachgeschaltet ist und eine erste steuerbare Drosselstelle (21) in dem Kältemittelkreislauf dem ersten Verdampfer (6) vor- und dem zweiten Verdampfer (7) nachgeschaltet ist, wobei ein erster Regler (28) den Öffnungsgrad der ersten steuerbaren Drosselstelle (21) unabhängig von der Temperatur der ersten Temperaturzone (1) anhand der Temperatur der zweiten Temperaturzone (2) steuert, **gekennzeichnet durch** einen Verdichterregler (29), der die Drehzahl des Verdichters (10) anhand der Temperatur der ersten Temperaturzone (1) steuert.

2. Kältegerät nach Anspruch 1, **dadurch gekennzeichnet, dass** der erste Regler (28) eingerichtet ist, bei Überschreitung einer Solltemperatur in der zweiten Temperaturzone (2) den Öffnungsgrad der ersten steuerbaren Drosselstelle (21) heraufzusetzen und bei Unterschreitung einer Solltemperatur in der zweiten Temperaturzone (2) den Öffnungsgrad der ersten steuerbaren Drosselstelle (21) herabzusetzen.

3. Kältegerät nach Anspruch 2, **dadurch gekennzeichnet, dass** der erste Regler (28) ein PI-Regler ist.

4. Kältegerät nach Anspruch 2 oder 3, **dadurch gekennzeichnet, dass** ein Eingang des ersten Reglers (28) an einen Temperatursensor (31) der zweiten Temperaturzone (2) angeschlossen ist.

5. Kältegerät nach einem der vorhergehenden Ansprüche, **dadurch gekennzeichnet, dass** der Verdichterregler (29) eingerichtet ist, bei Überschreitung einer Solltemperatur in der ersten Temperaturzone (1) die Drehzahl des Verdichters (10) heraufzusetzen und bei Unterschreitung einer Solltemperatur in der ersten Temperaturzone (1) die Drehzahl des Verdichters (10) herabzusetzen.

6. Kältegerät nach einem der vorhergehenden Ansprüche, **dadurch gekennzeichnet, dass** der Verdichterregler (29) an den ersten Regler (28) gekoppelt und eingerichtet ist, bei einer Vergrößerung des Öffnungsgrads der ersten steuerbaren Drosselstelle (21) die Drehzahl heraufzusetzen und sie bei einer Verringerung des Öffnungsgrads der ersten steuerbaren Drosselstelle (21) herabzusetzen.

7. Kältegerät nach einem der vorhergehenden Ansprüche, **dadurch gekennzeichnet, dass** der Verdichterregler (29) ein PI-Regler ist.

8. Kältegerät nach einem der vorhergehenden Ansprüche, **dadurch gekennzeichnet, dass** wenigstens ein dritter Verdampfer (8) zum Temperieren einer dritten Temperaturzone (3) dem zweiten Verdampfer (7) im Kältemittelkreislauf über eine zweite steuerbare Drosselstelle (20) vorgeschaltet ist und dass ein zweiter Regler (27) vorgesehen ist, um den Öffnungsgrad der zweiten steuerbaren Drosselstelle (20) anhand der Temperatur der dritten Temperaturzone (3) zu steuern.

9. Kältegerät nach einem der vorhergehenden Ansprüche, **dadurch gekennzeichnet, dass** im Kältemittelkreislauf zwischen einem Druckanschluss (16) des Verdichters (10) und den Verdampfern (6, 7, ...) eine stromaufwärtige steuerbare Drosselstelle (18') vorgesehen und der Öffnungsgrad dieser Drosselstelle (18') anhand eines Temperaturgefälles am ersten Verdampfer (6) gesteuert ist.

10. Kältegerät nach einem der vorhergehenden Ansprüche, **dadurch gekennzeichnet, dass** wenigstens einem der Verdampfer (6, 7, ...) ein Ventilator (25) zum Antreiben eines eine Oberfläche des Verdampfers (6, 7, ...) überstreichenden Luftstroms zugeordnet ist.

11. Kältegerät nach Anspruch 11, **dadurch gekennzeichnet, dass** der Ventilator (25) zwischen Betriebsmodi mit unterschiedlichen Drehzahlen umschaltbar ist.

12. Verfahren zum Betreiben eines Kältegeräts mit wenigstens einer ersten und einem zweiten Temperaturzone (1, 2), einem Kältemittelkreislauf, der einen Verdichter (10), einen ersten Verdampfer (6) zum Kühlen der ersten Temperaturzone (1) und einen zweiten Verdampfer (7) zum Kühlen der zweiten Temperaturzone (2) umfasst, wobei der erste Verdampfer (6) dem zweiten Verdampfer (7) in dem Kältemittelkreislauf in Reihe nachgeschaltet ist und eine erste steuerbare Drosselstelle (21) in dem Kältemittelkreislauf dem ersten Verdampfer (6) vor- und dem zweiten Verdampfer (7) nachgeschaltet ist, bei dem die Temperatur der zweiten Temperaturzone (2) gemessen (S1) und der Öffnungsgrad der ersten steuerbaren Drosselstelle (21) anhand der Temperatur der zweiten Temperaturzone (2) unabhängig von der Temperatur der ersten Temperaturzone (1) gesteuert (S2, S4, S5) wird, und bei dem die Temperatur der ersten Temperaturzone (1) gemessen (S₁) , **dadurch gekennzeichnet, dass** die Drehzahl des Verdichters (10) anhand der gemessenen Temperatur der ersten Temperaturzone gesteuert (S2, S4, S5) wird.

13. Verfahren nach Anspruch 12, bei dem die Drehzahl des Verdichters (10) im Falle einer Vergrößerung des Öffnungsgrads der ersten steuerbaren Drosselstelle (21) heraufgesetzt (S8) und bei einer Verringerung des Öffnungsgrads der ersten steuerbaren Drosselstelle (21) herabgesetzt (S7) wird.

## Claims

1. Refrigeration appliance having at least a first and a second temperature zone (1, 2), a refrigerant circuit that includes a compressor (10), a first evaporator (6) for cooling the first temperature zone (1) and a second evaporator (7) for cooling the second temperature zone (2), wherein the first evaporator (6) is connected in series with the second evaporator (7), downstream thereof in the refrigerant circuit, and a first controllable throttling point (21) is connected in the refrigerant circuit upstream of the first evaporator (6) and downstream of the second evaporator (7), wherein a first regulator (28) controls the degree of opening of the first controllable throttling point (21), independently of the temperature of the first temperature zone (1), by way of the temperature of the second temperature zone (2), **characterised by** a compressor regulator (29) that controls the speed of the compressor (10) by way of the temperature of the first temperature zone (1).

2. Refrigeration appliance according to claim 1, **characterised in that** the first regulator (28) is set up to increase the degree of opening of the first controllable throttling point (21) when a setpoint temperature in the second temperature zone (2) is exceeded, and to reduce the degree of opening of the first controllable throttling point (21) when the temperature falls below a setpoint temperature in the second temperature zone (2).

3. Refrigeration appliance according to claim 2, **characterised in that** the first regulator (28) is a PI controller.

4. Refrigeration appliance according to claim 2 or 3, **characterised in that** an input to the first regulator (28) is connected to a temperature sensor (31) of the second temperature zone (2).

5. Refrigeration appliance according to one of the preceding claims, **characterised in that** the compressor regulator (29) is set up to increase the speed of the compressor (10) when a setpoint temperature in the first temperature zone (1) is exceeded, and to reduce the speed of the compressor (10) when the temperature in the first temperature zone (1) falls below a setpoint temperature.

6. Refrigeration appliance according to one of the preceding claims, **characterised in that** the compressor regulator (29) is coupled to the first regulator (28) and set up to increase the speed when the degree of opening of the first controllable throttling point (21) is increased and to reduce it when the degree of opening of the first controllable throttling point (21) is reduced.

7. Refrigeration appliance according to one of the preceding claims, **characterised in that** the compressor regulator (29) is a PI controller.

8. Refrigeration appliance according to one of the preceding claims, **characterised in that** at least a third evaporator (8) for controlling the temperature of a third temperature zone (3) is connected upstream of the second evaporator (7) in the refrigerant circuit by way of a second controllable throttling point (20), and **in that** a second regulator (27) is provided in order to control the degree of opening of the second controllable throttling point (20) by way of the temperature of the third temperature zone (3).

9. Refrigeration appliance according to one of the preceding claims, **characterised in that**, in the refrigerant circuit between a pressure-side connector (16) of the compressor (10) and the evaporators (6, 7, ...), there is provided an upstream controllable throttling point (18'), and the degree of opening of this throttling point (18') is controlled by way of a drop in temperature at the first evaporator (6).

10. Refrigeration appliance according to one of the preceding claims, **characterised in that** associated with at least one of the evaporators (6, 7, ...) is a ventilator (25) for driving an air current that streams over a surface of the evaporator (6, 7, ...).

11. Refrigeration appliance according to claim 11, **characterised in that** the ventilator (25) is capable of being switched between operating modes of different speeds.

12. Method for operating a refrigeration appliance having at least a first and a second temperature zone (1, 2), a refrigerant circuit that includes a compressor (10), a first evaporator (6) for cooling the first temperature zone (1) and a second evaporator (7) for cooling the second temperature zone (2), wherein the first evaporator (6) is connected in series with the second evaporator (7), downstream thereof in the refrigerant circuit, and a first controllable throttling point (21) is connected in the refrigerant circuit upstream of the first evaporator (6) and downstream of the second evaporator (7), in which the temperature of the second temperature zone (2) is measured (S1) and the degree of opening of the first controllable throttling point (21), independently of the temperature of the first temperature zone (1), is controlled (S2, S4, S5) by way of the temperature of the second temperature zone (2) and in which the temperature of the first temperature zone (1) is measured (S1), **characterised in that** the speed of the compressor (10) is controlled (S2, S4, S5) by way of the temperature measured in the first temperature zone.

13. Method according to claim 12, in which if the degree of opening of the first controllable throttling point (21) is increased the speed of the compressor (10) is increased (S8), and if the degree of opening of the first controllable throttling point (21) is reduced the speed of the compressor (10) is reduced (S7).

## Revendications

1. Appareil frigorifique comprenant au moins une première et une deuxième zones de température (1, 2), un circuit de refroidissement qui comprend un compresseur (10), un premier évaporateur (6) destiné à refroidir la première zone de température (1), et un deuxième évaporateur (7) destiné à refroidir la deuxième zone de température (2), dans lequel le premier évaporateur (6) est installé en série dans le circuit de refroidissement en aval du deuxième évaporateur (7), et dans lequel un premier point d'étranglement (21) commandable est placé dans le circuit de refroidissement en amont du premier évaporateur (6) et en aval du deuxième évaporateur (7), dans lequel un premier régulateur (28) commande le degré d'ouverture du premier point d'étranglement (21) commandable indépendamment de la température de la première zone de température (1) à l'aide de la température de la deuxième zone de température (2), **caractérisé par** un régulateur de compresseur (29) qui commande la vitesse du compresseur (10) à l'aide de la température de la première zone de température (1).

2. Appareil frigorifique selon la revendication 1, **caractérisé en ce que** le premier régulateur (28) est configuré pour augmenter le degré d'ouverture du premier point d'étranglement (21) commandable en cas de dépassement d'une température théorique dans la deuxième zone de température (2), et pour diminuer le degré d'ouverture du premier point d'étranglement (21) commandable en cas de dépassement vers le bas d'une température théorique dans la deuxième zone de température (2).

3. Appareil frigorifique selon la revendication 2, **caractérisé en ce que** le premier régulateur (28) est un régulateur PI.

4. Appareil frigorifique selon la revendication 2 ou 3, **caractérisé en ce qu'**une entrée du premier régulateur (28) est connectée à un capteur de température (31) de la deuxième zone de température (2).

5. Appareil frigorifique selon l'une quelconque des revendications précédentes, **caractérisé en ce que** le régulateur de compresseur (29) est configuré pour augmenter la vitesse du compresseur (10) en cas de dépassement d'une température théorique dans la première zone de température (1), et pour baisser la vitesse du compresseur (10) en cas de dépassement vers le bas d'une température théorique dans la première zone de température (1).

6. Appareil frigorifique selon l'une quelconque des revendications précédentes, **caractérisé en ce que** le régulateur de compresseur (29) est couplé au premier régulateur (28) et est configuré pour augmenter la vitesse en cas d'un agrandissement du degré d'ouverture du premier point d'étranglement (21) commandable, et pour la baisser en cas d'une diminution du degré d'ouverture du premier point d'étranglement (21) commandable.

7. Appareil frigorifique selon l'une quelconque des revendications précédentes, **caractérisé en ce que** le régulateur de compresseur (29) est un régulateur PI.

8. Appareil frigorifique selon l'une quelconque des revendications précédentes, **caractérisé en ce qu'**au moins un troisième évaporateur (8) destiné à réguler la température d'une troisième zone de température (3) est installé dans le circuit de refroidissement en amont du deuxième évaporateur (7) par l'intermédiaire d'un deuxième point d'étranglement (20) commandable, et **en ce qu'**un deuxième régulateur (27) est ménagé afin de commander le degré d'ouverture du deuxième point d'étranglement (20) commandable à l'aide de la température de la troisième zone de température (3).

9. Appareil frigorifique selon l'une quelconque des revendications précédentes, **caractérisé en ce qu'**un point d'étranglement (18') commandable, placé en amont, est ménagé dans le circuit de refroidissement entre un raccord de pression (16) du compresseur (10) et les évaporateurs (6, 7, ...), et **en ce que** le degré d'ouverture de ce point d'étranglement (18') est commandé à l'aide d'une baisse de température sur le premier évaporateur (6).

10. Appareil frigorifique selon l'une quelconque des revendications précédentes, **caractérisé en ce qu'**un ventilateur (25) destiné à entraîner un courant d'air passant sur la surface de l'évaporateur (6, 7, ...) est associé à au moins l'un des évaporateurs (6, 7, ...).

11. Appareil frigorifique selon la revendication 11, **caractérisé en ce que** le ventilateur (25) est commutable entre des modes de fonctionnement ayant différentes vitesses.

12. Procédé de fonctionnement d'un appareil frigorifique comprenant au moins une première et une deuxième zones de température (1, 2), un circuit de refroidissement qui comprend un compresseur (10), un premier évaporateur (6) destiné à refroidir la première zone de température (1), et un deuxième évaporateur (7) destiné à refroidir la deuxième zone de température (2), dans lequel le premier évaporateur (6) est installé en série dans le circuit de refroidissement en aval du deuxième évaporateur (7), et dans lequel un premier point d'étranglement (21) commandable est placé dans le circuit de refroidissement en amont du premier évaporateur (6) et en aval du deuxième évaporateur (7), dans lequel procédé la température de la deuxième zone de température (2) est mesurée (S1) et le degré d'ouverture du premier point d'étranglement (21) commandable est commandé (S2, S4, S5) à l'aide de la température de la deuxième zone de température (2) indépendamment de la température de la première zone de température (1), et dans lequel procédé la température de la première zone de température (1) est mesurée (S1), **caractérisé en ce que** la vitesse du compresseur (10) est commandée (S2, S4, S5) à l'aide de la température mesurée de la première zone de température.

13. Procédé selon la revendication 12, dans lequel la vitesse du compresseur (10) est augmentée (S8) en cas d'un agrandissement du degré d'ouverture du premier point d'étranglement (21) commandable, et est baissée (S7) en cas d'une diminution du degré d'ouverture du premier point d'étranglement (21) commandable.
